# EUROPÄISCHE PATENTANMELDUNG

(11) **EP 4 604 448 A1**
(43) Veröffentlichungstag der Anmeldung: **20.08.2025**
(21) Anmeldenummer: 24158244.4
(22) Anmeldetag: 16.02.2024
(51) Int. Cl.: H04L 9/08, H04L 9/06

(54) **HOCHPERFORMANTE SCHLÜSSELERZEUGUNG MIT QUANTENSICHEREM BITAUSTAUSCH**

(71) Anmelder: Deutsche Telekom AG, 53113 Bonn (DE)
(72) Erfinder: GEITZ, Marc, 58089 Hagen (DE); DÖRING, Ronny, 16775 Sonnenberg (DE)
(74) Vertreter: Maucher Jenkins Patent- und Rechtsanwälte

(57) **Zusammenfassung**

Die Erfindung betrifft eine Lösung zur Erzeugung kryptographischer Schlüssel in einem Netzwerk mit quantensicherem Austausch dafür verwendeter Bits zwischen zwei Netzwerkknoten (1, 1'), welche einen jeweiligen von ihnen gemeinsam nutzbaren Schlüssel jeweils lokal erzeugen, indem sie diesen aus einer identischen von mindestens einer Zufallszahlen hoher Entropie bereitstellenden Entropiequelle (2) empfangenen Bitfolge durch Anwendung eines gemeinsamen Geheimnisses CSK mittels einer Key Derivation Function KDF berechnen. Dabei verwenden die Netzwerkknoten (1, 1') ein sich dynamisch änderndes CSK, wobei jede Ausprägung dieses veränderlichen CSK jeweils eine von den untereinander in einer QKD-Beziehung stehenden Netzwerkknoten (1, 1') nach einem QKD-Verfahren erzeugte Zufallszahl oder eine daraus abgeleitete Zufallszahl ist. Aufgrund einer gegenüber der Zufallszahlenerzeugungsrate der mindestens einen Entropiequelle (2) geringeren Zufallszahlenerzeugungsrate des QKD-Systems (3) wird mittels ein und desselben, jeweils auf eine Vielzahl unterschiedlicher von der mindestens einen Entropiequelle (2) empfangener Bitfolgen angewendeten CSK eine Mehrzahl von Schlüsseln quantensicher erzeugt.

## Beschreibung

Die Erfindung betrifft eine Lösung zur quantensicheren Erzeugung kryptographischer Schlüssel. Sie bezieht sich hierbei auf eine Lösung, bei welcher zur Erzeugung der entsprechenden Schlüssel unter anderem ein quantensicherer Austausch dafür verwendeter Bits über mindestens einen Quantenkanal mit einem zugehörigen, speziell gesicherten klassischen Kanal erfolgt. Gegenstände der Erfindung sind ein Verfahren und ein zu dessen Durchführung geeignetes respektive ausgebildetes System in Form eines Netzwerks. Soweit in diesem Zusammenhang von einem hochperformanten Verfahren für die Schlüsselerzeugung gesprochen wird, bezieht sich diese Aussage zum einen auf eine hohe Erzeugungsrate hinsichtlich ihrer Folge zufälliger, für die Schlüsselberechnung dienender Bits, aber auch auf eine vorzugsweise mögliche hohe Reichweite des dabei erfolgenden quantensicheren Bitaustauschs.

Der Absicherung der Infrastruktur öffentlicher Netze und der über diese Netze ausgetauschten Daten gegen potenzielle Angriffe und Manipulationen durch die Anwendung von Verschlüsselungstechniken kommt eine auch weiterhin stark steigende Bedeutung zu. Dies gilt insbesondere mit Blick auf die sich abzeichnende beschleunigte Entwicklung von Quantencomputern, welche in absehbarer Zeit zur Entwicklung von Quantencomputern führen dürfte, die nicht lediglich im Labor oder in Versuchsanordnungen, sondern in der Praxis einsetzbar sind. Dies bedingt, dass bisher im großen Umfang eingesetzte asymmetrische Verschlüsselungsverfahren bald nicht mehr als sicher angesehen werden können. Daher kommen bereits jetzt verstärkt auch symmetrische Verschlüsselungsverfahren unter Nutzung von Schlüsseln mit verhältnismäßig großer Bitlänge zum Einsatz.

In diesem Kontext gilt es auch zu bedenken, dass Infrastrukturen, wie beispielsweise nationale Kommunikationsnetze und deren Komponenten, unter anderem auch aus Kostengründen häufig über längere Zeiträume im Einsatz sind. Hierbei kann es sich um Zeiträume handeln, in denen möglicherweise bedeutende Fortschritte bei der Entwicklung von Quantencomputern gemacht werden. Es gilt daher bereits bei jetzt in den Einsatz gebrachten technischen Einrichtungen diese Möglichkeit "mitzudenken".

Hierbei gilt es insbesondere zwei Schwierigkeiten zu meistern. Die erste ist in dem für die symmetrische Verschlüsselung generell bestehenden Problem eines sicheren Austauschs verwendeter Schlüssel zwischen den sie einerseits zur Verschlüsselung von Daten und andererseits zur Entschlüsselung verschlüsselt empfangener Daten verwendenden Endpunkten/Entitäten, wie beispielsweise Netzwerkknoten eines modernen Netzes (NGN Next Generation Network), zu sehen. Eine weitere Schwierigkeit besteht darin, ausreichend große Mengen solcher Schlüssel bereitstellen und diese gegebenenfalls auch über große Distanzen sicher austauschen zu können.

Das erste zuvor angesprochene Problem kann grundsätzlich als gelöst angesehen werden. Es wurden bereits sehr unterschiedliche Verfahren und Ansätze für den sicheren Austausch zur symmetrischen Verschlüsselung zu verwendender Schlüssel entwickelt. Dabei sind an prominenter Stelle insbesondere Verfahren für die Schlüsselerzeugung und für den Schlüsselaustausch zu nennen, welche unter dem Begriff QKD (Quantum Key Distribution) zusammengefasst werden. Derartige Verfahren, bei denen die quantensichere Erzeugung kryptographischer Schlüssel im Allgemeinen mit ihrem unmittelbaren Austausch zwischen den sie als gemeinsame Schlüssel generierenden Entitäten einhergeht, bedienen sich quantenmechanischer Prinzipien. Die einzelnen unter dem Oberbegriff QKD zusammengefassten Verfahren unterscheiden sich dabei insbesondere durch das für den vorgenannten Schlüsselaustausch respektive für den Austausch der zur Schlüsselerzeugung genutzten Quantenzustände und Bits verwendete Protokoll. Ein insoweit vielfach beschriebenes und bereits auch praktisch eingesetztes Protokoll ist beispielsweise das BB84-Protokoll.

Aufgrund des beträchtlichen, mit der Nutzung der QKD verbundenen technischen und somit auch finanziellen Aufwands sowie physikalisch limitierender Faktoren, beispielsweise hinsichtlich der Reichweite, wurden zum einen alternative Verschlüsselungsverfahren, zum anderen aber auch Verfahren entwickelt, mittels welcher Schlüssel zur symmetrischen Verschlüsselung auch auf andere Weise erzeugt und ausgetauscht werden können. Im Hinblick auf alternative Verschlüsselungsverfahren ist beispielsweise die Post-Quantum-Kryptographie (PQC) zu nennen, auf welche jedoch an dieser Stelle nicht näher eingegangen werden soll, die gegebenenfalls auch mit QKD-Verfahren kombinierbar ist.

Hinsichtlich der sicheren Verteilung für die Schlüsselerzeugung verwendeter Bits respektive Zufallszahlen besteht andererseits zum Beispiel eine Möglichkeit darin, die Schlüssel gewissermaßen final in den sie später gemeinsam nutzenden Entitäten, wie beispielsweise zwei Netzwerkknoten eines Netzwerks, lokal zu erzeugen. Eine Möglichkeit hierfür besteht darin, dass zwei Netzwerkknoten jeweils identische Zufallszahlen hoher Entropie von einer Entropiequelle empfangen und aus diesen Zufallszahlen jeweils unter Einsatz eines bei ihnen vorliegenden, vorverteilten Pre-shared Secret (PSK) mittels einer Schlüsselableitungsfunktion (KDF = Key Derivation Function) lokal berechnen. Eine entsprechende Lösung wird beispielsweise durch EP 4 099 611 A1 offenbart.

Darüber hinaus sind noch auf dem Prinzip der Physical Layer Security (PLS) beruhende Verfahren, wie beispielsweise Wiretap Codes oder optische Modulation, bekannt geworden, auf welche jedoch hier ebenfalls nicht vertiefend eingegangen werden soll.

Wie schon angesprochen, unterliegt der Einsatz von QKD-Verfahren in terrestrischen Implementierungen insbesondere einer Limitierung ihrer Reichweite. Dies hängt damit zusammen, dass die QKD Einzelphotonen mit sehr geringer Leistung nutzt. Soweit die Einzelphotonen, wie aus praktischen Gründen bevorzugt, über Glasfaserkabel übertragen werden, unterliegen diese jedoch einer Dämpfung, welche die Übertragungsreichweite der Photonen aufgrund ihrer geringen Leistung stark limitiert. Auch bei der Verwendung von im Hinblick auf eine besonders niedrige Dämpfung sehr hochwertiger Glasfaserkabel werden für die Schlüsselerzeugung nach dem Prinzip der (herkömmlichen) QKD maximale Reichweiten zwischen 100 und 500 km genannt.

Eine Verbesserung bietet in dieser Hinsicht beispielsweise eine Fortentwicklung des Prinzips der QKD, die sogenannte Twin-Field-QKD (TF-QKD). TF-QKD-Systeme nutzen zwei Einzelphotonenquellen, je eine Quelle in den die Schlüssel gemeinsam erzeugenden und austauschenden Endpunkten respektive Netzwerkknoten, in der Kryptographie auch als Alice und Bob bezeichnet. Diese senden synchron Einzelphotonen an eine Analysestation aus, die sich in dem Quantenkanal zwischen Alice und Bob befindet. Für die Schlüsselerzeugung werden hierbei nicht die in der Analysestation gemessenen quantenmechanischen Zustände der Einzelphotonen, sondern die zwischen ihnen auftretende Wechselwirkung und dadurch auftretende Bell-Zustände genutzt. Durch die Nutzung der TF-QKD lassen sich Reichweiten von, nach heutigem Stand, bis zu 1.000 km erreichen. Allerdings ist hierbei die Schlüsselaustauschrate verhältnismäßig gering und nimmt, wie bei anderen QKD-Verfahren auch, mit wachsender Distanz der Endpunkte sehr stark ab. Die Rate kann hierbei unter Umständen nur noch 0,01 Schlüsselbit pro Sekunde bei einer Distanz von > 800 km betragen. Eine solche Schlüsselrate ist jedoch für einen praxisorientierten breiten Einsatz viel zu gering.

Aufgabe der Erfindung ist es, eine alternative Lösung zur Erzeugung kryptographischer Schlüssel zur Verfügung zu stellen, welche zuvor beschriebene Nachteile vermeidet. Dabei soll die Schlüsselerzeugung insbesondere im Hinblick auf die Erzeugungsrate sowie vorzugsweise außerdem im Hinblick auf die Reichweite eines dazu erforderlichen Bitaustauschs möglichst hochperformant sein. Hierzu sind ein Verfahren anzugeben und ein zur Durchführung des Verfahrens geeignetes System bereitzustellen.

Die Aufgabe wird durch ein Verfahren mit den Merkmalen des Patentanspruchs 1 gelöst. Ein zur Durchführung des Verfahrens geeignetes, die Aufgabe lösendes System, wird durch den ersten Sachanspruch charakterisiert. Vorteilhafte Aus- und Weiterbildungen der Erfindung sind durch die jeweiligen Unteransprüche gegeben.

Bevor das Verfahren und das zu seiner Durchführung geeignete Systems näher beschrieben werden, soll an dieser ein Überblick über vorstehend bereits gebrauchte sowie nachfolgend und in den Patentansprüchen verwendete Abkürzungen und die ihnen in diesem Kontext jeweils beigemessene Bedeutung gegeben werden. Hierbei bedeuten:
- BMS: Bit-Managementeinheit (Bit Management System),
- CSK: Gemeinsames Geheimnis (Common Secret Key),
- ED: Entropieverteilung (Entropy Distribution),
- ES: Entropiequelle (Entropy Source),
- ENC: Verschlüsseler/Entschlüsseler (Encrypter/Decrypter),
- HSM: Hardware-Sicherheitsmodul (Hardware Security Modul),
- KDF: Key Derivation Function,
- LBS: Lokaler Bitspeicher (Local Bit Storage),
- OTP: Einmalverschlüsselungsmuster/Einmalverschlüsselungsblock (One Time Pad) - Mehrzahl: OTPs,
- PLS: Physical Layer Security,
- PSK: Pre-shared Secret,
- QCI: Quantum Communication Infrastructure,
- QKD: Quantum Key Distribution,
- TF-QKD: Twin Field QKD,
- TRNG: physikalischer Zufallszahlengenerator (True Random Number Generator).

Gemäß dem zur Lösung der Aufgabe vorgeschlagenen Verfahren zur Erzeugung kryptographischer Schlüssel in einem Netzwerk werden entsprechende Schlüssel von zwei sie gemeinsam nutzenden Netzwerkknoten eine Netzwerkknotenpaares jeweils lokal in jedem der beiden Netzwerkknoten erzeugt, wobei das Verfahren aber einen quantensicheren Austausch dafür verwendeter Bits zwischen den beiden genannten Netzwerkknoten einschließt.

Die lokale Erzeugung eines jeweiligen Schlüssels in den beiden Netzwerkknoten erfolgt, indem die Netzwerkknoten den Schlüssel unabhängig voneinander aus einer identischen, durch sie beide empfangenen Bitfolge berechnen, welche sie von einer Zufallszahlen hoher Entropie bereitstellenden Entropiequelle über einen klassischen Kanal empfangen. Dies geschieht durch Anwendung eines gemeinsamen Geheimnisses CSK (CSK = Common Secret Key) beider Netzwerkknoten auf die vorgenannte, von der Entropiequelle über einen klassischen Kanal empfangene Bitfolge mittels einer Key Derivation Function KDF. Bei Letzterer handelt es sich um eine identische Prozessierungsvorschrift, nach welcher der jeweilige Schlüssel unter Einsatz des CSK aus der von der Entropiequelle empfangenen Bitfolge (Zufallszahl) in jedem der beiden Netzwerkknoten berechnet wird.

Das Verfahren ist hierbei so ausgestaltet, dass die Netzwerkknoten zur Schlüsselberechnung ein sich dynamisch änderndes CSK verwenden. Und zwar verwenden die dazu in einer QKD-Beziehung stehenden und somit zu demselben QKD-System gehörenden Netzwerkknoten als veränderliches CSK eine von ihnen gemeinsam nach einem QKD-Verfahren erzeugte Zufallszahl oder eine hieraus abgeleitete Zufallszahl. Zur letztgenannten Alternative, nach welcher als jeweiliges CSK eine Zufallszahl verwendet wird, welche aus einer von den Netzwerkknoten nach dem QKD-Verfahren gemeinsam erzeugten Zufallszahl abgeleitet wird, wird später noch etwas näher eingegangen. Wie aber jedenfalls aus den vorstehenden Ausführungen deutlich wird, basiert das Verfahren insoweit auf der Verwendung eines veränderlichen CSK für die lokale Schlüsselerzeugung, als jeweils dann, wenn durch das QKD-System, zu welchem die beiden Netzwercknoten gehören, eine neue Zufallszahl generiert wurde, das bis dahin geltende und für die Schlüsselberechnung verwendete CSK durch diese neue Zufallszahl, also ein neues CSK, ersetzt wird.

Das Verfahren nutzt hierbei in vorteilhafter Weise den Umstand aus, dass die Biterzeugungsrate respektive die Zufallszahlenerzeugungsrate des QKD-Systems typischerweise deutlich geringer ist als die Zufallszahlenerzeugungsrate der beispielsweise mittels eines Quanten-Zufallszahlengenerators (Quantum Random Number Generator - QRNG) realisierten Entropiequelle. Der insoweit bestehende Unterschied zwischen den Zufallszahlenerzeugungsraten wird dabei genutzt, indem ein und dasselbe (für eine gewisse Zeit gültige) CSK (jeweils einzeln) auf eine Vielzahl unterschiedlicher, jeweils von der Entropiequelle empfangener Bitfolgen angewendet wird, also mit diesem CSK eine Mehrzahl von Schlüsseln berechnet wird, ehe das CSK verändert, das heißt durch eine neue von dem QKD-System generierte Zufallszahl ersetzt wird.

Zur Erzeugung der als veränderliches CSK dienenden Zufallszahlen kommt vorzugsweise ein QKD-Verfahren nach dem eingangs schon erwähnten Prinzip der TF-QKD oder ein vergleichbares, weitreichendes QKD-Verfahren zum Einsatz. Im Falle der Nutzung der TF-QKD umfasst ein jeweiliges QKD-System neben den beiden die finalen, zur Verschlüsselung von Nutzdaten dienenden Schlüssel berechnenden Netzwerkknoten eine zwischen diesen angeordnete, mit beiden Knoten über mindestens einen Quantenkanal verbundene Analyseeinheit.

Bei dem zuvor erläuterten Grundprinzip des Verfahrens handelt es sich also um eine Weiterentwicklung des Ansatzes, Schlüssel quantensicher dadurch zu erzeugen, dass diese auf lokaler Ebene (in einem jeweiligen Netzwerkknoten) aus von einer Entropiequelle bereitgestellten Zufallszahlen hoher Entropie auf lokaler Ebene unter Einsatz eines gemeinsamen Geheimnisses beider Netzwerkknoten mit Hilfe einer KDF berechnet werden. Die hier dargestellte Weiterbildung dieses Ansatzes hat den Vorteil, dass es sich bei dem gemeinsamen Geheimnis (CSK) nicht um ein starres, gegebenenfalls sehr lange Zeit gültiges CSK handelt, was aus sicherheitstechnischer Sicht möglicherweise nachteilig sein könnte, sondern um ein veränderliches CSK, welches seinerseits im Zuge eines quantensicheren Bitaustauschs erzeugt wird.

Sofern die Erzeugung eines jeweiligen, nur für einige Zeit gültigen CSK nach dem Prinzip der TF-QKD erfolgt, können die beiden involvierten Netzwerkknoten zudem einen Abstand bis zu 1.000 km haben, so dass das dargestellte Konzept im Maßstab einer nationalen Reichweite realisierbar ist. Dies ist ein weiterer Vorteil. Andererseits wird der der TF-QKD anhaftende Nachteil einer verhältnismäßig geringen Biterzeugungsrate dadurch überwunden, dass nicht die mittels der TF-QKD generierten Zufallszahlen selbst als Schlüssel verwendet werden, sondern diese lediglich als Basis für die Schlüsselerzeugung dienen, nämlich als ein CSK, welches für eine gewisse Zeit wiederholt auf unterschiedliche, mit hoher Zufallszahlenerzeugungsrate von einer Entropiequelle generierte Zufallszahlen angewendet wird. Als eine solche Entropiequelle kann dabei, wie bereits angedeutet, vorteilhaft ein QRNG oder auch eine Gruppe miteinander verkoppelter QRNGs verwendet werden. Durch den Einsatz einer Gruppe miteinander verkoppelter QRNGs lässt sich die Biterzeugungsrate der verwendeten Entropiequelle gegenüber der Biterzeugungsrate des die beiden Netzwerkknoten umfassenden QKD-Systems, durch welches die im Rahmen des Verfahrens für mehrere von der Entropiequelle bezogene Bitsequenzen (Zufallszahlen hoher Entropie) verwendeten Zufallszahlen erzeugt werden, noch weiter erhöhen.

Für die mindestens eine Entropiequelle ist aber auch der Einsatz eines oder mehrerer Zufallszahlen auf der Grundlage physikalischer Zufallsprozesse erzeugenden TRNG (physical TRNG mit TRNG = True Random Number Generator) denkbar. Solche Zufallszahlengeneratoren erzeugen Zufallssignale respektive Zufallszahlen beispielsweise durch Nutzung in technischen Systemen und/oder in ihrer Umgebung auftretenden Rauschens.

Für die Schlüsselerzeugung können, ausgehend von dem zuvor erläuterten grundsätzlichen Konzept, im Detail unterschiedliche Verfahrensgestaltungen genutzt werden. Entsprechend einer insoweit vorgeschlagenen Verfahrensgestaltung wird dabei jeder der aus ein und demselben CSK und einer jeweiligen durch die mindestens eine Entropiequelle bereitgestellten Zufallszahl erzeugte Schlüssel separat, und zwar verknüpft mit einem eindeutigen Identifikator, jeweils in einem in jedem der beiden Netzwerkknoten vorgesehenen, lokal durch eine BMS (Bit-Managementsystem respektive eine Bit-Managementeinheit) gemanagten Bitspeicher (LBS) abgelegt, welcher als ein Hardware-Sicherheitsmodul HSM oder als Teil eines solchen Moduls ausgebildet ist. Aus diesem kann der Schlüssel später - ausgewählt jeweils mittels des Identifikators - von einem Encrypter eines jeweiligen Netzwerkknotens zur blockweisen symmetrischen Verschlüsselung zwischen den Netzwerkknoten auszutauschender Nutzdaten beziehungsweise durch einen Decrypter (hier Auswahl desselben Schlüssels über den Identifikator) eines jeweiligen Netzwerkknotens zur Entschlüsselung empfangener, zuvor durch den jeweils anderen Netzwerkknoten verschlüsselter Daten abgerufen werden.

Eine andere Möglichkeit der Verfahrensgestaltung besteht darin, dass alle aus ein und demselben CSK und einer jeweiligen durch die mindestens eine Entropiequelle bereitgestellten Zufallszahl erzeugten Schlüssel zu einem einmalig für die Verschlüsselung zu verwendenden Bitblock respektive zu einem zufälligen Bitmuster zur Einmalverschlüsselung (Einmalverschlüsselungsmuster - im Weiteren auch OTP) zusammengezogen werden, welches, ebenfalls unter Verknüpfung mit einem Identifikator, in einem lokal gemanagten (BMS) und angeordneten Bitspeicher (LBS) des jeweiligen Netzwerkknotens abgespeichert wird. In derselben Weise werden dann mit den dieses CSK jeweils ersetzenden neuen CSKs weitere OTPs erzeugt. Ein jeweiliges, so erzeugtes OTP kann später (wiederum anhand eines Identifikators) aus dem LBS als Bitstrom (Bitstream) beispielsweise als ein Stream mit einer Länge von 1 MBit, abgerufen und zur Verschlüsselung eines Datenstroms maximal gleicher Länge verwendet werden, der dann von dem ihn verschlüsselnden Netzwerkknoten an den jeweils anderen ausgesendet wird. Da Grundlage auch hier die symmetrische Verschlüsselung ist, kann dasselbe OTP von dem den verschlüsselten Datenstrom empfangenden anderen Netzwerkknoten aus dessen LBS (durch Verwendung desselben Identifikators) durch einen Decrypter abgerufen und zur Entschlüsselung der als Datenstrom empfangenen Daten verwendet werden.

Darüber hinaus ist eine Mischform der beiden zuvor erläuterten Ausgestaltungsvarianten möglich. Hierbei werden die durch Anwendung des dynamisch veränderlichen CSK auf die durch die mindestens eine Entropiequelle bereitgestellten Zufallszahlen erzeugten Schlüssel teilweise jeweils einzeln (zur späteren Bildung jeweils einer Blockchiffre) und teilweise in Form eines durch Zusammenziehen mehrerer dieser Schlüssel gebildeten OTP in einem LBS eines jeden der beiden Netzwerkknoten abgelegt. Sie sind hierbei mithilfe eines Identifikators aus dem jeweiligen LBS durch einen Nutzdaten aussendenden Netzwerkknoten zur Verschlüsselung durch den Encrypter des Netzwerkknotens, je nach gewähltem Verschlüsslungsverfahren, jeweils als Einzelschlüssel zur blockweisen Verschlüsselung von Daten oder als OTP zur Verschlüsselung eines Datenstroms abrufbar. Korrespondierend damit wird der jeweils selbe Schlüssel (Einzelschlüssel für Blockchiffre oder OTP für Datenstrom) vom Decrypter des die verschlüsselten Daten empfangenden Netzwerkknotens zur Entschlüsselung aus seinem LBS abgerufen.

Wie vorstehend ausgeführt, wird die Ablage erzeugter kryptographischer Schlüssel und/oder OTPs in dem lokalen LBS eines jeweiligen Netzwerkknotens sowie deren spätere Verwendung lokal gemanagt, und zwar durch ein Bit-Managementsystem BMS unter Verwendung diese Schlüssel/OTPs eindeutig bezeichnender Identifikatoren. Im Hinblick auf die gegenüber der mindestens einen Entropiequelle deutlich geringere Zufallszahlenerzeugungsrate des QKD-Systems und die mehrmalige Verwendung einer jeweiligen von diesem erzeugten, als veränderliches CSK dienenden Zufallszahl wird auch deren Zwischenspeicherung (im LBS) und Handling mithilfe eines jeweiligen Identifikators durch das bereits genannte BMS lokal gemanagt.

Wie es die hier verwendete Bezeichnung Bit-Managementsystem respektive Bit-Managementeinheit vermittelt, erfolgt das Management vorzugsweise letztlich sogar hinunter bis auf die Ebene der einzelnen Bits, insbesondere der als CSK dienenden Zufallszahlen. Hierbei kann es außerdem vorteilhaft - aber nicht zwingend (dies ist letztlich eine Frage der konkreten Implementierung) - sein, jedes einzelne Bit einer als veränderliches CSK dienenden Zufallszahl durch einen Identifikator zu kennzeichnen. Dies erschließt sich insbesondere bei näherer Betrachtung der zeitlichen Abläufe. Die Erzeugung einzelner für eine Zufallszahl verwendeter Bits durch das QKD-System kann nach dem derzeitigen Stand der Technik bei 800 km Distanz beispielsweise bis zu 2 Minuten dauern. Das heißt aber die Erzeugung zu einer 256-Bit-Zufallszahl für das CSK zusammenzuführender Bits dauert möglicherweise über 8 Stunden, so dass der Umgang mit den einzelnen Bits durch das BMS zu managen ist, und zwar vorzugsweise unter Verwendung eines Identifikators für jedes einzelne dieser Bits.

In diesem Zusammenhang sei angemerkt, dass die Berechnung der Schlüssel zur blockweisen Verschlüsselung von Nutzdaten oder der OTPs zur Verschlüsselung von Streams mit Nutzdaten beispielsweise ebenfalls durch das BMS respektive durch entsprechende Funktionseinheiten BMS erfolgen kann. Insoweit stellt auch dies, einschließlich die dabei erfolgende Anwendung der KDF im Grunde nichts anderes als eine Form des Bit-Managements dar.

Eine Weiterbildung des Verfahrens kann ferner darin bestehen, dass durch Anwendung eines CSK auf eine von der Entropiequelle empfangene Bitfolge mittels der KDF berechnete Zufallszahlen nicht unmittelbar als Schlüssel zur Verschlüsselung von Nutzdaten verwendet werden, sondern jeweils als ein neues, somit aus dem ursprünglichen CSK respektive der entsprechenden Zufallszahl abgeleitetes gemeinsames Geheimnis CSK2. Hiermit werden dann, nämlich durch Anwendung dieses CSK2 auf weitere von der Entropiequelle empfangene Bitfolgen mittels der KDF oder aber auch mittels einer anderen in beiden Netzwerkknoten verwendeten identischen Key Derivation Function KDF2, die kryptographischen Schlüssel oder OTPs berechnet.

Auf diese Weise wird gewissermaßen eine Art Kaskadierung erreicht, bei der durch ein CSK, welches durch das QKD-System erzeugt wird, maximal 10^12 Bits = 3,9*10^9 CSK2 (a 256 Bits), da mittels AES (Advanced Encryption Standard) mit einem Schlüssel (hier mit dem ursprünglichen CSK) 1 TBit an Daten sicher verschlüsselt werden kann, bevor dieser respektive das gemeinsame Geheimnis CSK durch ein anderes ausgetauscht werden muss.

Jedes der 3,9*10^9 CSK2 kann nun wiederum 1 TBit Zufallszahlen (RND) in geheime Bits T umrechnen, so dass mit einem CSK, welches durch das QKD-System erzeugt wurde, 3.9 * 10^21 geheime Bits T berechnet werden können.

Angenommen, die Leitungskapazität zwischen den Netzwerkwerkendpunkten beträgt 1 PBit / Sekunde (das ist ein Faktor 1000 über dem derzeitigen Stand der Technik), so reicht die Menge der geheimen Bits T aus, um Daten für ein Zeitintervall von 3,9*10^21 Bit / 10^15 Bit / Sek = 3,9*10^6 Sekunden = 1,5 Monate per OTP zu sichern.

Da 1,5 Monate >> 8h, also größer als die angenommene Zufallszahlenerzeugungsrate respektive CSK-Erzeugungsrate des QKD-Systems ist, besteht ein großer Puffer, um Systemprobleme bearbeiten zu können. Ein nach dem Verfahren arbeitendes System ist daher als ausreichend resilient einzuordnen.

Ein solches die Aufgabe lösendes System, nämlich ein Netzwerk zur Erzeugung kryptographischer Schlüssel mit einem quantensicheren Austausch dafür verwendeter Bits zwischen jeweils zwei Netzwerkknoten, umfasst
- mindestens eine Zufallszahlen hoher Entropie bereitstellende Entropiequelle und
- mindestens ein Netzwerkknotenpaar, dessen zwei Netzwerkknoten mit der mindestens einen Entropiequelle über einen klassischen Kanal verbundenen sind und durch Verbindung mit mindestens einem Quantenkanal untereinander in einer QKD-Beziehung stehen und somit zu einem, nämlich demselben QKD-System gehören. An dieser Stelle sei darauf hingewiesen, dass in einem QKD-System zu einem Quantenkanal immer auch ein speziell gesicherter, ausschließlich für die QKD genutzter klassischer Kanal gehört. Soweit daher in dieser Beschreibung und in den Patentansprüchen von (mindestens) einem Quantenkanal gesprochen oder mit Blick auf die Zeichnungen Bezug genommen wird, ist ein solcher spezieller klassischer Kanal auch ohne ausdrückliche Nennung immer mitzulesen.

Jeder der beiden Netzwerkknoten des vorgenannten mindestens einen Netzwerkknotenpaares des Systems ist mindestens mit wenigstens einer Einzelphotonenquelle, mit wenigstens einem Einzelphotonendetektor, mit wenigstens einem Encrypter/Decrypter, mit einem als Hardware-Sicherheitsmodul HSM ausgebildeten Bitspeicher LBS und mit einer/einem diesen LBS sowie dessen Zusammenspiel mit dem Encrypter/Decrypter sowie mit den zu dem QKD-System gehörenden Einheiten managenden Bit-Managementeinheit/Bit-Managementsystem BMS ausgestattet. Beide Netzwerkknoten sind zudem dazu ausgebildet, aus einer identischen, durch diese beiden Netzwerkknoten von der mindestens einen Entropiequelle empfangenen Bitfolge durch Anwendung eines gemeinsamen Geheimnisses, vorliegend eines von ihnen gemeinsam erzeugten CSK mittels einer Key Derivation Function KDF Schlüssel zu berechnen. Die Funktionalität für die Schlüsselberechnung der KDF kann beispielsweise durch das zuvor genannte BMS oder aber auch durch eine ausschließlich hierfür vorgesehene, aber mit dem BMS zumindest interagierende Funktionseinheit bereitgestellt werden.

Bei dem QKD-System, zu welchem die Netzwerkknoten des mindestens einen Netzwerkknotenpaares gehören, handelt es sich gemäß der hier vorgeschlagenen Lösung vorzugsweise (also nicht zwingend) um ein gemeinsame Zufallszahlen nach dem Prinzip der TF-QKD, also der Twin-Field-QKD, erzeugendes QKD-System, da derartige Systeme derzeit die größte Reichweite für terrestrische QKD-Lösungen aufweisen. Zu einem solchen nach dem Prinzip der TF-QKD arbeitenden QKD-System gehört neben den beiden Netzwerkknoten des mindestens einen Netzwerkknotenpaares eine zwischen diesen Netzwerkknoten in einem Quantenkanal angeordnete Analysestation. Eine solche, insoweit zu dem Quantenkanal gehörende Analysestation verfügt typischerweise über zwei Photodetektoren zum Detektieren von Einzelphotonen. Zudem sind die Netzwercknoten des QKD-Systems dazu ausgebildet und eingerichtet, die nach einem QKD-Verfahren, vorzugsweise im Wege der TF-QKD, erzeugten gemeinsamen Zufallszahlen jeweils als CSK für die bei ihnen lokal erfolgende Schlüsselberechnung zu verwenden.

Vorsorglich sei aber darauf hingewiesen, dass für das die als veränderliches CSK dienenden Zufallszahlen erzeugende QKD-System grundsätzlich auch noch andere Ausbildungsformen in Betracht kommen. So kann es sich etwa - abseits von der später noch angesprochenen Möglichkeit einer Verbindung nationaler Netze mittels Satelliten - bei dem QKD-System auch um ein Satelliten- respektive Space-QKD-System handeln. In diesem Zusammenhang ist zu berücksichtigen, dass in derartigen Satelliten-QKD-Systemen für die Bodenstationen meist nur eine verhältnismäßig kurze Zeit der Sichtbarkeit der zum System gehörenden Satelliten (ca. 8 Minuten für LEO-Satelliten = Low Earth Satellites) gegeben ist. Kommen dann vielleicht auch noch schlechtes Wetter oder Synchronisationsprobleme hinzu, ergeben sich beim Einsatz solcher QKD-Systeme ebenfalls sehr geringe Zufallszahlenerzeugungsraten, was zu der Überlegung führen könnte, mit derartigen QKD-Systemen erzeugte Zufallszahlen, entsprechend der hier vorgestellten Erfindung als veränderliches CSK für die lokale Schlüsselerzeugung zu verwenden.

Die lokale Schlüsselberechnung erfolgt dabei, wie schon ausführlich dargestellt, durch Anwendung des entsprechenden CSK auf von der mindestens einen Entropiequelle empfangene Zufallszahlen hoher Entropie. Bei der mindestens einen Entropiequelle oder bei mindestens einer von gegebenenfalls mehreren Entropiequellen handelt es sich vorzugsweise um einen QRNG oder um mehrere miteinander verkoppelte QRNG. Dieser/diese befindet/befinden sich zudem vorzugsweise in der gesicherten Umgebung des QKD-Systems respektive der QKD-System oder in einem Trusted Node. Als Entropiequelle kann/können ferner auch ein Zufallszahlen auf der Grundlage physikalischer Zufallsprozesse erzeugender TRNG (True Random Number Generator) oder um mehrere miteinander verkoppelte TRNG dienen.

Gemäß einer möglichen Ausbildungsform des erfindungsgemäßen Netzwerks, welche insbesondere den aus der Anwendung der TF-QKD resultierenden Vorteil einer hohen Reichweite bei der Erzeugung der als CSK dienenden Zufallszahlen nutzt, kann es sich bei diesem um ein nationales Kommunikationsnetz, beispielsweise um ein Next Generation Network NGN handeln. Ein solches nationales Netz umfasst mehrere Netzwerkknotenpaare, deren je zwei in unterschiedlichen Städten angeordnete Netzwerkknoten zu einem gemeinsamen QKD-System gehören. Im Falle dessen, dass mit Blick auf die in einem nationalen Netz zwischen den Netzwerkknoten bestehenden Entfernungen, beispielsweise die TF-QKD zum Einsatz kommt, umfasst das QKD-System außerdem eine zwischen den beiden Netzwerkknoten in einem sie verbindenden Quantenkanal angeordnete respektive zum Quantenkanal gehörende Analysestation. Dem Grundprinzip der Erfindung folgend, weist selbstverständlich auch ein solches Netzwerk mindestens eine Entropiequelle auf, welche eines oder mehrere der vorgenannten Netzwerkknotenpaare mit Zufallszahlen hoher Entropie versorgt. Die Ausbildung kann hierbei derart sein, dass in dem nationalen Kommunikationsnetz lediglich eine zentrale Entropiequelle vorgesehen ist, welche alle Knotenpaare des Netzwerks mit Zufallszahlen versorgt.

Je nach Anlage der gegebenenfalls bereits für ein nationales Kommunikationsnetz bestehenden Infrastruktur und in Abhängigkeit der territorialen Gegebenheiten, wie insbesondere zwischen den Netzwerkknoten einzelner Städte bestehender Distanzen, kann ein solches Netzwerk auch so ausgebildet sein, dass dieses mindestens einen Netzwerkknoten aufweist, der im Zusammenhang mit der Schlüsselerzeugung und beim Datenaustausch zwischen den Netzwerkknoten zweier Städte als Transferknoten fungiert. Im Sinne der hier vorgestellten Lösung sollen aber dabei die beiden zur Erzeugung gemeinsamer kryptographischer Schlüssel und bei deren Nutzung für einen verschlüsselten Datenaustausch über den Transferknoten miteinander agierenden Netzwerkknoten (Netzwerkknoten in der ersten Stadt sowie Netzwerkknoten in der zweiten Stadt) als ein gemeinsames Schlüssel auf lokaler Ebene erzeugendes Netzwerkknotenpaar angesehen werden, für welches der zwischen den Netzwerkknoten dieses Netzwerkknotenpaares angeordnete, Transferknoten gewissermaßen, jedenfalls aber in Bezug auf den Ablauf des beanspruchten Verfahrens, transparent ist.

Dies schließt indes nicht aus, dass der Transferknoten außerdem gemeinsam mit jeweils einem anderen Netzwerkknoten als ein Netzwerkknoten eines jeweiligen Netzwerkknotenpaares im Sinne der vorgestellten Lösung fungiert. In dieser Eigenschaft kann ein solcher Netzwerkknoten (Transferknoten), ebenso wie im Übrigen auch jeder Netzwerkknoten eines das Verfahren nutzenden Netzwerkknotenpaares, zudem gemeinsam mit jeweils einem anderen Netzwerkknoten Teil jeweils eines anderen (weiteren) Netzwerkknotenpaares sein.

Ein Transferknoten ist jeweils als Trusted Node auszubilden, da die beiden Netzwerkknoten eines Netzwerkknotenpaares - ein Netzwerkknoten in einer ersten Stadt und ein Netzwerkknoten in einer zweiten Stadt - Schlüssel über diesen Transferknoten austauschen, indem sie diese Schlüssel beispielsweise mit einem von ihnen gemeinsam mit dem Transferknoten durch TF-QKD gebildeten Schlüssel XOR verknüpfen. Im Zuge mehrfacher XOR-Verknüpfungen kann dabei der zwischen den beiden Städten auszutauschende Schlüssel sicher übertragen werden, aber in dem Transferknoten möglicherweise für Angreifer zugänglich sein. Daher ist dieser als Trusted Node auszubilden.

Bei einem gemäß der Erfindung ausgebildeten System kann es sich auch um ein Netz handeln, welches mehrere nationale Netze - insbesondere verschiedener Staaten - der zuvor beschriebenen Art umfasst. In ein solches Netz, aber auch in ein einzelnes nationales Netz können außerdem Satelliten-QKD-Systeme (Space-QCI-Systems) mit einbezogen sein. Bei einem multinationalen Netz kann außerdem gegebenenfalls eine zentrale Entropiequelle die Netzwerkknoten mehrerer oder auch aller nationaler Netze mit Zufallszahlen versorgen.

Nachfolgend sollen anhand von Zeichnungen Ausführungsbeispiele für die Erfindung respektive für deren Implementierung gegeben und nochmals einige Aspekte der vorgestellten Lösung erläutert werden. Die Zeichnungen zeigen im Einzelnen:
- Fig. 1:: ein Schema für eine mögliche Ausbildungsform des Systems,
- Fig. 2:: die Topologie eines nationalen Netzes in Deutschland bei Implementierung des vorgeschlagenen Systems,
- Fig. 3:: die Topologie eines nationalen Netzes in Frankreich bei Implementierung des vorgeschlagenen Systems,
- Fig. 4:: die Topologie eines nationalen Netzes in Spanien bei Implementierung des vorgeschlagenen Systems,
- Fig. 5:: ein Beispiel für die Einbeziehung der nationalen Netze gemäß der Figuren 2 bis 4 in ein durch Integration eines Space-QCI-Systems erweitertes Netz.

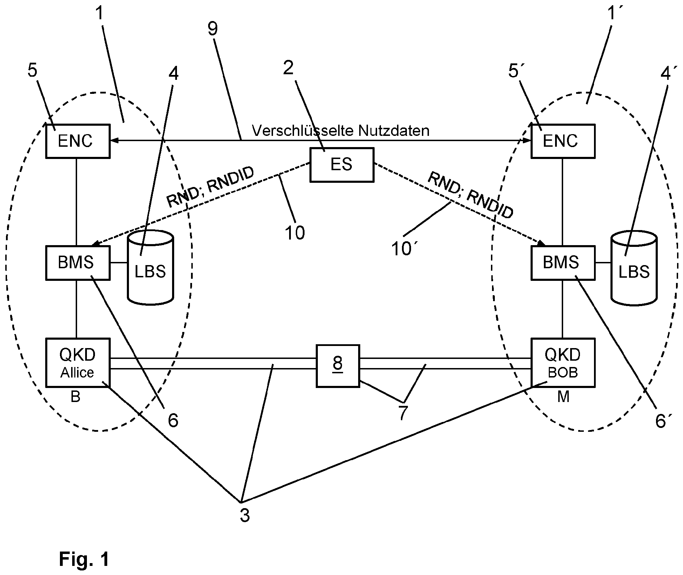

Die Fig. 1 zeigt die schematische Darstellung für eine mögliche grundsätzliche Ausbildung des zur Lösung der Aufgabe vorgeschlagenen Systems. Dieses System respektive Netzwerk besteht im Wesentlichen aus einem Netzwerkknotenpaar, also aus zwei sich beispielsweise in Berlin B und München M befindenden Netzwerkknoten 1, 1', welche ein gemeinsames QKD-System 3 ausbilden, sowie aus einer Entropiequelle ES 2. Die beiden Netzwerkknoten 1,1' sind über einen Quantenkanal 7 und eine von diesem umfasste Analysestation 8 miteinander verbunden, wodurch es ihnen ermöglicht ist, gemeinsame Zufallszahlen nach dem Prinzip der TF-QKD zu erzeugen. Jeder der Netzwerkknoten 1,1' weist zudem eine Bit-Managementeinheit BMS 6, 6'sowie einen lokalen Bitspeicher LBS 4, 4' zur Ablage von Schlüsseln und gegebenenfalls als CSK dienender Zufallszahlen auf. Die von dem QKD-System, beispielsweise unter Einsatz der TF-QKD bei einer Distanz von bis zu 1.000 km innerhalb einer Produktionszeit von 2 min pro Bit, erzeugten Bits werden sicher in dem LBS 4, 4' eines jeweiligen der beiden Netzwerkknoten 1,1' eines Netzwerkknotenpaares verwahrt. Nachdem 256 Bits erzeugt wurden - also, um im Bespiel zu bleiben, nach ca. 8 h - werden dieses Bits zu einem 256-Bit AES-Schlüssel aggregiert und für die nachfolgende Verwendung als CSK persistiert.

Darüber hinaus sind die Netzwerkknoten 1,1' des Netzwerkknotenpaares über einen klassischen Kanal 9 miteinander verbunden, über welchen sie Nutzdaten, symmetrisch verschlüsselt, miteinander austauschen und welcher nichts mit dem in dem QKD-System 3 zu dem Quantenkanal 7 gehörenden speziellen klassischen Kanal zu tun hat. Hierfür weisen die Netzwerkknoten 1,1' jeweils einen Encrypter/Decrypter ENC 5, 5' auf. Einen weiteren, klassischen Kanal 10, 10' weist das System zudem zur Verbindung der beiden Netzwerkknoten 1,1' des Netzwerkknotenpaares mit der mindestens einen Entropiequelle ES 2 auf.

In ihrer Eigenschaft als Bestandteile des QKD-Systems 3 erzeugen die beiden Netzwerkknoten 1,1' gemeinsame Zufallszahlen nach dem Prinzip der TF-QKD, welche sie jeweils als CSK, also als gemeinsames (temporär gültiges) Geheimnis, für die lokale Schlüsselerzeugung nutzen. Hierbei wenden sie ein jeweiliges CSK auf jeweils eine durch beide Netzwerkknoten 1, 1' von der Entropiequelle ES 2 empfangene identische Folge zufällig aneinandergereihter Bits (Zufallszahlen RND mit zugehörigen Identifikatoren RNDID) an. Sie berechnen genauer gesagt mittels einer in beiden Netzwerkknoten 1,1' identisch zum Einsatz gelangenden Prozessierungsvorschrift, nämlich einer KDF (Key Derivation Function), unter Anwendung des jeweiligen (temporär gültigen) CSK auf eine von der Entropiequelle ES 2 empfangene Bitfolge (Zufallszahlen RND) einen gemeinsamen Schlüssel. Aufgrund der unterschiedlichen Zufallszahlenerzeugungsraten des QKD-Systems 3 einerseits und der Entropiequelle ES 2 andererseits können die Netzwerkknoten dabei ein durch TF-QKD erzeugtes CSK (eine Zufallszahl) mehrfach anwenden, nämlich jeweils einzeln auf eine Bitfolge einer Vielzahl von zwischenzeitlich bei ihnen von der Entropiequelle ES 2 eingehenden Bitfolgen (Zufallszahlen RND). Die Berechnung der kryptographischen Schlüssel (oder gegebenenfalls der OTPs) erfolgt bei dem in der Fig. 1 gezeigten Beispiel durch zu dem jeweiligen BMS 6, 6' der Metzwerkknoten 1,1' gehörende (nicht im Detail dargestellte) Funktionseinheiten.

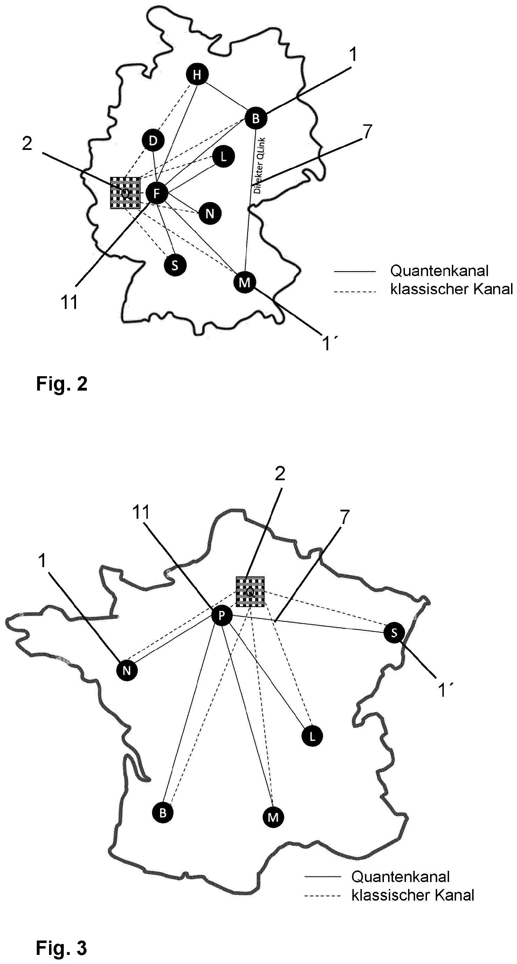

Die Fig. 2 zeigt eine mögliche Implementierung des grundsätzlichen Systems gemäß der Fig. 1 in einem nationalen Netz, in diesem Falle in Deutschland. In der Zeichnung ist die Topologie des Netzes dargestellt, durch welches eine Kommunikationsinfrastruktur QCI- (Quantum Communication Infrastructure) ausgebildet wird. Demnach besteht dieses Netz aus mehreren, jeweils wie in der Fig. 1 dargestellt ausgebildeten Netzwerkknotenpaaren mit Netzwerkknoten 1, 1 '. In der Darstellung wurde auf die in dem jeweiligen, die Netzwerkknoten 1,1' zweier Städte miteinander verbindenden Quantenkanal 7 angeordnete Analysestation verzichtet. Wie die Darstellung erkennen lässt, verfügt das nationale Netz über eine, wie hier gezeigt beispielsweise in Frankfurt (F) am Main angeordnete zentrale Entropiequelle 2, welche alle Netzwerkknotenpaare dieses nationalen Netzes mit Zufallszahlen hoher Entropie versorgt und dazu mit diesen Netzwercknoten 1,1' über einen klassischen Kanal verbunden ist.

Aus der Zeichnung ist außerdem ersichtlich, dass viele der in den einzelnen Städten, nämlich in Düsseldorf (D), in Hamburg (H), in Berlin (B), in Leipzig (L), in Nürnberg (N), in München (M) und in Stuttgart (S) angeordneten Netzwerkknoten 1,1' nicht direkt miteinander verbunden sind, sondern über einen in Frankfurt am Main angeordneten Transferknoten 11. Es handelt sich hierbei um eine Trusted Node, welcher Bestandteil mehrerer gemäß der Erfindung gebildeter Netzwercknotenpaare respektive nach dem Prinzip der TF-QKD arbeitender QKD-Systeme 3 ist. Lediglich die Netzwerkknoten 1, 1' in Berlin und München sind als Netzwerkknotenpaar direkt über einen Quantenlink (Quantenkanal 7) miteinander verbunden. Jedes der gebildeten Netzwerkknotenpaare, also beispielsweise das Netzwerkknotenpaar der Netzwerkknoten in Hamburg und Frankfurt am Main oder das Netzwerkknotenpaar der Netzwerkknoten in Stuttgart und Frankfurt am Main, erzeugt kryptographische Schlüssel nach dem vorgeschlagenen Verfahren. Die beiden vorgenannten Netzwerkknoten in Hamburg und in Stuttgart tauschen dabei Schlüssel über den speziell gesicherten als Transferknoten 11 fungierenden Netzwerkknoten (Trusted Node = TN) in Frankfurt am Main aus, indem sie diese beispielsweise unter Anwendung eines Schemas mit mehreren XOR-Verknüpfungen über den Trusted Node in Frankfurt am Main übertragen.

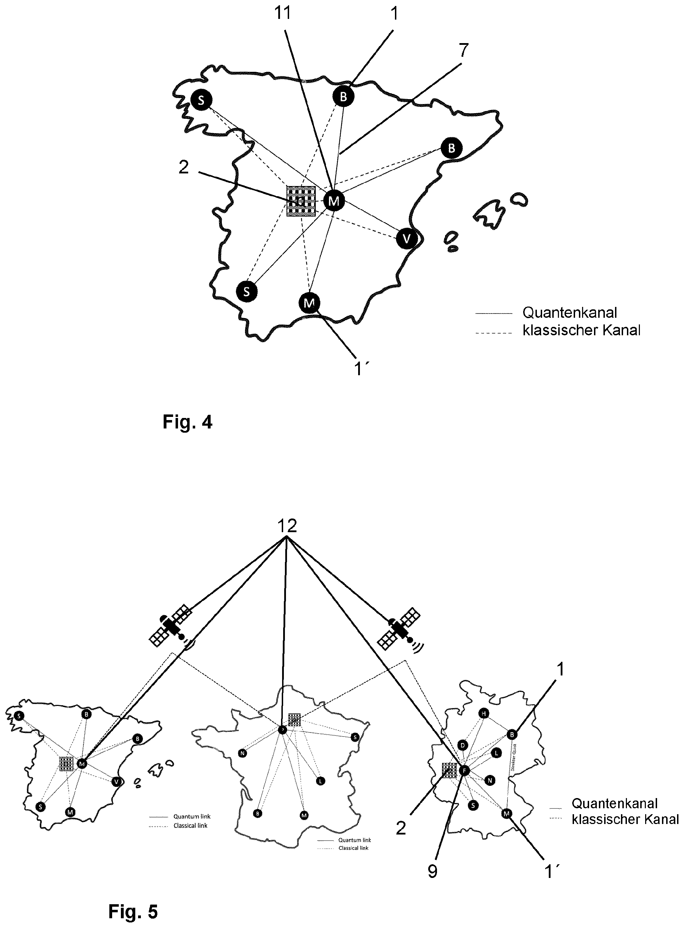

Die Figuren 3 und 4 zeigen vergleichbare nationale Netze mit beispielhaften Implementierungen für Frankreich (Fig. 3) und Spanien (Fig. 4). In Frankreich sind dabei beispielsweise Netzwerkknoten in Strasbourg (S), in Marseille (M), in Bordeaux (B) und in Nantes (N) angeordnet sowie ein als Trusted Node ausgebildeter, als Transferknoten 11 dienender Netzwerkknoten in Paris (P). In Spanien befinden sich die Netzwerkknoten in Barcelona (B), in Valencia (V), in Malaga (M), in Sevilla (S), in Santiago (S) und in Bilbao (B) sowie in Madrid (M), wobei letzterer wiederum auch als Transferknoten 11 fungiert und dafür als Trusted Node ausgebildet ist.

In allen drei, in den Fig 2 bis 4 gezeigten Beispielen werden aufgrund der großen Reichweite der TF-QKD-Systeme Trusted Nodes (Transferknoten 11) entlang der quantenoptischen Weitverkehrsstrecke eigentlich nicht mehr zwingend benötigt. Ferner werden Quantenrepeater oder vergleichbare zukünftige analoge Technologien (zumindest für den Use Case des quantensicheren Schlüsselaustauschs) obsolet. Alleinig der zentrale Knoten eines Landes (Frankfurt/Deutschland, Paris/Frankreich oder Madrid/Spanien) wird im Falle einer Verbindung mehrerer nationaler Netze und Einbeziehung eines Space-QCI-Systems respektive des Satelliten-QKD-Systems 12 (siehe hierzu Fig. 5) weiterhin als Trusted Node betrieben werden müssen. Hiervon ist schon aufgrund des Technologiebruchs (Glasfaser am Boden, Freiraumübertragung zwischen Satelliten und Bodenstationen im Sichtbarkeitsbereich - LoS = Line of Sight) vorerst auch weiterhin auszugehen, da terrestrische Quanten-Repeater und Satelliten-QKD-Systeme 12 nicht nahtlos miteinander harmonieren. So müssen beispielsweise Schlüssel, die zwischen Madrid und Bilbao respektive Madrid und Malaga ausgetauscht wurden, zum Key Forwarding von Zufallszahlen zwischen Malaga und Bilbao dienen. Es lässt sich also nicht komplett auf Transferknoten 11 (TNs = transfer nodes) verzichten, allerdings wird ihre Zahl in den gezeigten Beispielen auf 1 minimiert.

Die Fig. 5 zeigt eine Implementierung, bei welcher die in den Figuren 2 bis 4 gezeigten nationalen Netze durch Integration eines Space-QCI-Systems (Satelliten-QKD-System 12) miteinander verbunden sind. Das aus den mehreren nationalen Netzen bestehende Netzwerk insgesamt weist dabei neben den jeweiligen Transferknoten 11 in den nationalen Netzen (Berlin, Paris, Madrid) weitere als Transferknoten 11 fungierende Netzwerkknoten auf, welche als Satelliten respektive als deren Bestandteil ausgebildet sind. Diese bilden jeweils gemeinsam mit in die einzelnen nationalen Netze eingebundenen dedizierten Bodenstationen Satelliten-QKD-Systeme 12 aus.

Die QCI-Satelliten umlaufen die Erde dabei in Höhen von ca. 400 km und sind für die Bodenstationen nur für wenige Minuten sichtbar. In dieser Zeit müssen die Lichtquelle am Satelliten und die Teleskope am Boden exakt aufeinander ausgerichtet werden, um QKD durchführen zu können. Eine QKD-Bodenstation ist eine sehr sensible Einrichtung. Sie wird daher ebenfalls als ein Trusted Node respektive als Teil eines solchen Trusted Node ausgebildet, welcher besonders geschützt wird. Dabei bietet es sich an, den (in den gezeigten Beispielen jeweils einzigen) Netzwerkknoten der nationalen QCI, der sowieso als Trusted Node (TN) realisiert werden muss, zusätzlich als Gateway-Knoten respektive als Integrationspunkt zwischen dem terrestrischen und dem Space-QCI-System (Satelliten-QKD-System 12) zu verwenden, also die jeweilige Bodenstation eines Space-QCI-Systems dort anzusiedeln.

Ein Schlüsselaustausch von Bilbao nach Berlin würde demnach zwei Trusted Nodes TN benötigen, einen TN in Madrid und einen TN in Frankfurt. Die nationalen Trusted Nodes lassen sich besser schützen, weil durch die minimale Anzahl der nationalen Trusted Nodes (=1) sämtliche Mittel in den Schutz eines einzelnen Knotens je Nation fließen können. Der Knoten könnte wie eine nuklear-militärische Anlage gesichert werden. Abweichend von dem gezeigten Beispiel könnte auch eine gemeinsame Entropiequelle für alle nationalen Netze vorgesehen sein.

Für die vorgestellte Lösung lässt sich, insbesondere auch mit Blick auf das zuletzt gezeigte Beispiel, eine Reihe von Vorteilen benennen, nämlich:
- Einsatz eines quantenoptischen Schlüsselaustauschsystems auf nationaler Ebene mit - je nach Landesgröße) der Notwendigkeit eventuell nur eines Trusted Nodes TN.
- Gute Kosteneffizienz, da die TNs die teuersten Komponenten eines quantenoptischen Schlüsselaustauschsystems sind.
- Reduktion der Angriffsvektoren und der technischen Seitenkanäle, da auch die Anzahl der QKD-Systeme minimal ist.
- Integration von terrestrischen und Satelliten-QKD Systemen an einer Stelle im Netzwerk, die sich sodann maximal schützen lässt.

- Minimale Anzahl an TN-Hops von jedem Knoten einer nationalen QCI zu einer anderen nationalen QCI (nämlich immer 2).
- Internationale Integration immer nur in einem QKD-Knoten (Frankfurt, Paris, Madrid).
- Durch die Integration mit Entropieverteilung ED (Entropie Distribution) ED/CSK lassen sich kryptographische Artefakte / Schlüssel lokal berechnen, ohne diese jemals austauschen zu müssen.
- Das CSK wird jedoch innerhalb eines Tages erneuert und informationstheoretisch sicher verteilt, womit der einzige große Nachteil bisher bekannt gewordener ED/CSK Verfahren eliminiert wird.
- Auch reichen die niedrigen Schlüsselaustauschraten aus, um CSKs zur Authentifizierung der klassischen Key Shifting Kanäle zu produzieren.
- Jedes CSK kann dabei ausnahmsweise bei heutigen Datenlasten der Faser Backbone Netzwerke und bei Verwendung einer symmetrischen Blockchiffre mehr als 1000 Jahre beibehalten werden (unverändert bleiben). Das bedeutet, sollte das TF-QKD-System für einige Zeit nicht funktionieren, und könnte somit das CSK nicht täglich ausgetauscht werden, so könnte das Netzwerk dennoch sicher weiterbetrieben werden.
- Beim gemischten Betriebsmodus - Verwendung des OTP-Verfahrens - ist die Gültigkeit nur einige TBit an Nutzdaten - hier lassen sich nur ausgewählte, speziell zu sichernde Daten "verschlüsseln".
- Im OTP-Betriebsmodus erreicht das Verfahren ausreichend hohe Schlüsselraten, um beispielsweise eine 1 PBit/s Leitung für einen Zeitraum von 1,7 Monaten sicher betreiben zu können.
- Hybridisierung mit PQC-Verfahren ist möglich.
- Einfache und kostengünstige Realisierung im Vergleich zu Quantenrepeatern oder klassischen TN QKD Netzwerken.

## Patentansprüche

1. Verfahren zur Erzeugung kryptographischer Schlüssel in einem Netzwerk mit quantensicherem Austausch dafür verwendeter Bits zwischen zwei Netzwerkknoten (1, 1'), welche einen jeweiligen von ihnen gemeinsam nutzbaren Schlüssel jeweils lokal erzeugen, indem sie den Schlüssel aus einer identischen, durch beide Netzwerkknoten (1, 1') von mindestens einer Zufallszahlen hoher Entropie bereitstellenden Entropiequelle (2) empfangenen Bitfolge durch Anwendung eines gemeinsamen Geheimnisses CSK der Netzwerkknoten mittels einer Key Derivation Function KDF, nämlich einer identischen Prozessierungsvorschrift, berechnen, **dadurch gekennzeichnet, dass** die Netzwerkknoten (1, 1') zur Schlüsselberechnung ein sich dynamisch änderndes gemeinsames Geheimnis CSK verwenden, wobei es sich bei jeder Ausprägung dieses veränderlichen gemeinsamen CSK jeweils um eine von den untereinander in einer QKD-Beziehung stehenden und somit zu einem, nämlich demselben QKD-System (3) gehörenden Netzwerkknoten (1, 1') nach einem Verfahren der Quantum Key Distribution QKD gemeinsam erzeugte Zufallszahl oder um eine daraus abgeleitete Zufallszahl handelt und wobei, aufgrund einer gegenüber der Zufallszahlenerzeugungsrate der mindestens einen Entropiequelle (2) geringeren Zufallszahlenerzeugungsrate des QKD-Systems (3), mittels ein und desselben, jeweils auf eine Vielzahl unterschiedlicher von der mindestens einen Entropiequelle (2) empfangener Bitfolgen angewendeten gemeinsamen Geheimnisses CSK eine Mehrzahl von Schlüsseln quantensicher erzeugt wird.

2. Verfahren nach Anspruch 1, **dadurch gekennzeichnet, dass** die Netzwerkknoten (1, 1') die jeweils eine Ausprägung des veränderlichen Geheimnisses CSK bildenden Zufallszahlen nach dem Prinzip der TF-QKD, das heißt der Twin-Field-QKD, gemeinsam erzeugen.

3. Verfahren nach Anspruch 1 oder 2, **dadurch gekennzeichnet, dass** die die als veränderliches CSK genutzten Zufallszahlen sowie die mittels der KDF lokal erzeugten Schlüssel in einem jeweiligen der beiden Netzwerkknoten (1, 1') in einem lokal angeordneten und lokal gemanagten, als Hardware-Sicherheitsmodul HSM oder Teil davon ausgebildeten Bitspeicher LBS (4, 4') persistiert werden.

4. Verfahren nach Anspruch 3, **dadurch gekennzeichnet, dass** jeder einzelne der aus ein und demselben CSK und einer jeweiligen durch die mindestens eine Entropiequelle (2) bereitgestellten Zufallszahl erzeugte Schlüssel in dem LBS (4, 4') eines jeden der beiden Netzwerkknoten (1, 1') abgelegt wird, aus welchem er später von einem Encrypter (5, 5') eines der beiden Netzwerkknoten (1, 1') zur blockweisen symmetrischen Verschlüsselung an den anderen Netzwerkknoten (1, 1') auszusendender Daten und durch einen Decrypter (5, 5') des jeweils anderen, die verschlüsselten Daten empfangenden Netzwerkknotens (1, 1') zu deren Entschlüsselung abrufbar ist.

5. Verfahren nach Anspruch 3, **dadurch gekennzeichnet, dass** alle aus ein und demselben CSK und einer jeweiligen durch die mindestens eine Entropiequelle (2) bereitgestellten Zufallszahl erzeugten Schlüssel zu einem Einmalverschlüsselungsmuster OTP zusammengezogen werden, welches abgelegt wird in dem LBS (4, 4') eines jeden der beiden Netzwerkknoten (1, 1'), aus welchem dieses OTP als Stream geheimer Bits zur einmaligen Verwendung für die verschlüsselte Übertragung eines von einem der Netzwerkknoten (1, 1') zu dem anderen Netzwerkknoten (1, 1') übertragenen, maximal dieselbe Anzahl von Bits wie das OTP aufweisenden Datenstroms und in dem jeweils anderen Netzwercknoten (1, 1') zur Entschlüsselung des von ihm empfangenen verschlüsselten Datenstroms abrufbar ist.

6. Verfahren nach Anspruch 3, **dadurch gekennzeichnet, dass** die durch Anwendung des dynamisch veränderlichen CSK auf die durch die mindestens eine Entropiequelle (2) bereitgestellten Zufallszahlen erzeugten Schlüssel teilweise jeweils einzeln und teilweise in Form eines durch Zusammenziehen mehrerer dieser Schlüssel gebildeten OTP in dem LBS (4, 4') eines jeden der beiden Netzwerkknoten (1, 1') abgelegt werden, aus welchem sie folglich zum verschlüsselten Austausch von Daten zwischen den Netzwerkknoten (1, 1') bei der Verschlüsselung, je nach gewähltem Verschlüsselungsverfahren, von einem Encrypter jeweils als Einzelschlüssel zur blockweisen Verschlüsselung von Daten oder als OTP zur Verschlüsselung eines Datenstroms und durch einen Decrypter zur Entschlüsselung verschlüsselt empfangener Daten abrufbar sind.

7. Verfahren nach Anspruch 1 oder 5, **dadurch gekennzeichnet, dass** durch Anwendung eines CSK auf von der mindestens einen Entropiequelle (2) empfangene Bitfolgen mittels der KDF berechnete Zufallszahlen jeweils als ein neues gemeinsames Geheimnis CSK2 verwendet werden, mit welchem durch seine Anwendung auf weitere von der mindestens einen Entropiequelle (2) empfangene Bitfolgen mittels der KDF oder einer anderen in beiden Netzwerkknoten verwendeten identischen Key Derivation Function KDF2, die kryptographischen Schlüssel oder OTPs berechnet werden.

8. System, nämlich Netzwerk zur Erzeugung kryptographischer Schlüssel mit einem quantensicheren Austausch dafür verwendeter Bits zwischen jeweils zwei Netzwerkknoten (1, 1'), umfassend
- mindestens eine Zufallszahlen hoher Entropie bereitstellende Entropiequelle (2) und
- mindestens ein Netzwerkknotenpaar, dessen zwei Netzwerkknoten (1, 1') durch Verbindung über mindestens einen Quantenkanal (7) untereinander in einer QKD-Beziehung stehen und somit zu einem, nämlich demselben QKD-System (3) gehören sowie jeweils mindestens mit wenigstens einer Einzelphotonenquelle, mit wenigstens einem Photonendetektor zur Detektion von Einzelphotonen, mit wenigstens einem Encrypter/Dekrypter (5, 5'), mit einem als Hardware-Sicherheitsmodul HSM oder Teil eines solchen HSM ausgebildeten, lokal gemanagten Bitspeicher LBS (4, 4') ausgestattet sind, wobei beide Netzwerkknoten (1, 1') dazu ausgebildet sind, aus einer identischen, durch diese beiden Netzwerkknoten (1, 1') von der mindestens einen Entropiequelle (2) empfangenen Bitfolge durch Anwendung eines gemeinsamen Geheimnisses CSK mittels einer Key Derivation Function KDF, nämlich einer identischen Prozessierungsvorschrift, einen Schlüssel zu berechnen,
**dadurch gekennzeichnet, dass** die beiden Netzwerkknoten (1, 1') des QKD-Systems (3) ausgebildet und eingerichtet sind, für den Einsatz von ihnen gemeinsam erzeugter Zufallszahlen als dynamisch veränderliches CSK, wobei eine jeweilige durch das QKD-System erzeugte, ein neues CSK ausbildende Zufallszahl ein Substitut ist für ein durch das QKD-System früher erzeugtes, in den Netzwerkknoten bis zur Erzeugung dieses neuen CSK zur lokalen Schlüsselberechnung genutztes CSK.

9. System nach Anspruch 8, **dadurch gekennzeichnet, dass** es sich bei dem QKD-System (3), zu dem die Netzwerkknoten (1, 1') des mindestens einen Netzwerkknotenpaares gehören, um ein gemeinsame Zufallszahlen als CSD nach dem Prinzip der TF-QKD, das heißt der Twin-Field-QKD, erzeugendes QKD-System (3) handelt, zu welchem neben den beiden Netzwerkknoten (1, 1') des mindestens einen Netzwerkknotenpaares eine zwischen diesen Netzwercknoten (1, 1') in dem mindestens einen Quantenkanal (7) angeordnete Analysestation (8) gehört.

10. System nach Anspruch 8 oder 9, **dadurch gekennzeichnet, dass** es sich bei der mindestens einen Entropiequelle (2) oder bei mindestens einer von mehreren Entropiequellen (2) um einen Quanten-Zufallszahlengenerator QRNG oder um mehrere miteinander verkoppelte QRNG handelt.

11. System nach Anspruch 8 oder 9, **dadurch gekennzeichnet, dass** es sich bei der mindestens einen Entropiequelle (2) oder bei mindestens einer von mehreren Entropiequellen (2) um einen Zufallszahlen auf der Grundlage physikalischer Zufallsprozesse erzeugenden TRNG oder um mehrere miteinander verkoppelte TRNG handelt.

12. Netzwerk nach Anspruch 9, **dadurch gekennzeichnet, dass** es sich bei diesem um ein nationales Kommunikationsnetz handelt, mit
- mehreren Netzwerkknotenpaaren, deren je zwei in unterschiedlichen Städten angeordnete Netzwerkknoten (1, 1') zusammen mit einer zwischen ihnen, in einem sie verbindenden Quantenkanal (7) angeordneten Analysestation (8) jeweils zu einem gemeinsamen, Zufallszahlen nach dem Prinzip der TF-QKD erzeugenden QKD-System (3) gehören und
- einer zentralen, alle Netzwerkknotenpaare zur lokalen Schlüsselerzeugung mit Zufallszahlen hoher Entropie versorgenden Entropiequelle (2).

13. Netzwerk nach Anspruch 12, **dadurch gekennzeichnet, dass** das nationale Netz mindestens einen Transferknoten (11) umfasst, über welchen die beiden Netzwerkknoten (1, 1') mindestens eines Netzwerkknotenpaares bei der durch sie jeweils lokal erfolgenden Erzeugung gemeinsamer Schlüssel miteinander interagieren, wobei dieser Transferknoten (11) als ein Trusted Node ausgebildet ist.

14. Netzwerk, bestehend aus mehreren nationalen Netzen nach Anspruch 12 oder 13, **dadurch gekennzeichnet, dass** zwei oder mehr dieser nationalen Netze untereinander über mindestens ein QKD-fähiges Satellitensystem (12) miteinander verbunden sind, wobei jedes der über mindestens ein Satelliten-QKD-System (12) mit einem anderen nationalen Netz verbundenes nationales Netz mindestens einen als Trusted Node ausgebildeten Netzwerkknoten mit einer zu diesem mindestens einen Satelliten-QKD-System (12) gehörenden dedizierten Bodenstation umfasst.

15. System nach Anspruch 14, **dadurch gekennzeichnet, dass** dieses mindestens eine, Netzwerkknoten (1, 1') mehrerer nationaler Netze mit Zufallszahlen hoher Entropie versorgende Entropiequelle (2) aufweist.
